# EUROPEAN PATENT APPLICATION

(11) **EP 2 849 484 A1**
(43) Date of publication of application: **18.03.2015**
(21) Application number: 12878488.1
(22) Date of filing: 08.06.2012
(51) Int. Cl.: H04W 28/08

(54) **SMALL CELL COVERAGE ADJUSTMENT METHOD, DEVICE AND SYSTEM**

(71) Applicant: Huawei Technologies Co., Ltd, Shenzhen, Guangdong 518129 (CN)
(72) Inventor: CHEN, Dong, Shenzhen Guangdong 518129 (CN); XU, Min, Shenzhen Guangdong 518129 (CN)
(74) Representative: Thun, Clemens
(86) International application number: PCT/CN2012/076653
(87) International publication number: WO 2013/181842

(57) **Abstract**

A small cell coverage adjusting method, device, and system are disclosed. The method includes: determining whether a load of a macro cell meets a coverage parameter value adjusting condition of a small cell; and if the load of the macro cell meets the coverage parameter value adjusting condition of the small cell, sending a request message carrying a coverage parameter adjusting value to the small cell, so that after determining to accept the coverage parameter adjusting value, the small cell adjusts a current coverage parameter value of the small cell according to the coverage parameter adjusting value. Embodiments of the present application can dynamically adjust a coverage parameter of the small cell according to a current condition of the macro cell and the small cell, so that the small cell can offload services on the macro cell better, and decrease intra-frequency interference caused by the coverage of the small cell to the macro cell.

## Description

### TECHNICAL FIELD

The present application relates to the field of communication technologies, and in particular, to a small cell coverage adjusting method, device, and system.

### BACKGROUND

Currently, small cells (Small Cell) are commonly deployed in many macro cells (Macro Cell), and a small cell can provide seamless coverage to some blind spot areas and hotspot areas of a macro cell, which can not only greatly improve the system capacity, but also help a macro cell offload services. A network jointly deployed by macro cells and small cells is also called a heterogeneous network (Heterogeneous Network, HetNet).

In a heterogeneous network, macro cells and small cells may be intra-frequency deployed or may also be inter-frequency deployed, and in particular, when the macro cells and small cells are intra-frequency deployed, the coverage range of the macro cells and the coverage range of the small cells are overlapped, which causes the problem of intra-frequency interference. The coverage range of a small cell may overlap with the coverage range of multiple macro cells, or may also overlap with the coverage range of only one macro cell. In practical applications, if more user equipments (User Equipment, UE) accessing a small cell exist, more throughput may be obtained by the small cell, and at the same time, a better result of offloading services may be provided for a macro cell. However, the transmit power of a small cell is much less than the transmit power of a macro cell, and a UE detects the signal quality of small cells (mainly the pilot signal quality of the small cells) to select a small cell to access and accept services of the small cell, so the number of UEs accessing the small cell is small, and the coverage range of the small cell is small as well. Therefore, in the prior art, when a UE detects the signal quality of a small cell, in general, a range extension (Range Extension, RE) value is added based on the signal quality of the small cell to make the UE access the small cell, thereby enlarging the number of UEs accessing the small cell, and extending the coverage range of the small cell.

However, the above RE value is generally fixedly preset on the small cell, which causes that the small cell cannot offload services on the macro cell better. Meanwhile, the small cell blindly expanding the coverage may also increase the intra-frequency interference to the macro cell.

### SUMMARY

In a plurality of aspects, the present application provides a small cell coverage adjusting method, device, and system, which are used to dynamically adjust the coverage of a small cell, so that the small cell can offload services on a macro cell better, and decrease intra-frequency interference caused by the coverage of the small cell to the macro cell.

In one aspect, the present application provides a small cell coverage adjusting method, which includes: determining whether a load of a macro cell meets a coverage parameter value adjusting condition of a small cell; and if the load of the macro cell meets the coverage parameter value adjusting condition of the small cell, sending a request message carrying a coverage parameter adjusting value to the small cell, so that after receiving the coverage parameter adjusting value, the small cell adjusts a current coverage parameter value of the small cell according to the coverage parameter adjusting value.

In another aspect, the present application provides a small cell coverage adjusting method, which includes: receiving a request message carrying a coverage parameter adjusting value from a macro cell; and determining whether a small cell accepts the coverage parameter adjusting value, and if yes, thereby adjusting a current coverage parameter value of the small cell according to the coverage parameter adjusting value.

Correspondingly, in one aspect, the present application provides a small cell coverage adjusting device, which includes: a determining unit, configured to determine whether a load of a macro cell meets a coverage parameter value adjusting condition of a small cell; and an adjusting unit, configured to: when the load of the macro cell meets the coverage parameter value adjusting condition of the small cell, send a request message carrying a coverage parameter adjusting value to the small cell, so that after receiving the coverage parameter adjusting value, the small cell adjusts a current coverage parameter value of the small cell according to the coverage parameter adjusting value.

Correspondingly, in another aspect, the present application provides a small cell coverage adjusting device, which includes: a transceiver unit, configured to receive a request message carrying a coverage parameter adjusting value from a macro cell; a determining unit, configured to determine whether a small cell accepts the coverage parameter adjusting value; and an adjusting unit, configured to: when a determining result of the determining unit is yes, adjust a current coverage parameter value of the small cell according to the coverage parameter adjusting value.

Correspondingly, in one aspect, the present application provides a small cell coverage adjusting system, which includes a first small cell coverage adjusting device and a second small cell coverage adjusting device, where: the first small cell coverage adjusting device is configured to determine whether a load of a macro cell meets a coverage parameter value adjusting condition of a small cell, and if the load of the macro cell meets the coverage parameter value adjusting condition of the small cell, send a request message carrying a coverage parameter adjusting value to the second small cell coverage adjusting device; and the second small cell coverage adjusting device is configured to receive the request message carrying the coverage parameter adjusting value from the first small cell coverage adjusting device, and determine whether the small cell accepts the coverage parameter adjusting value, and if yes, adjust a current coverage parameter value of the small cell according to the coverage parameter adjusting value.

In the technical solutions described above, a coverage parameter of the small cell can be dynamically adjusted according to a current condition of the macro cell and the small cell, so that the small cell can offload services on the macro cell better; and further, the small cell blindly expanding the coverage is avoided to decrease the intra-frequency interference caused by the coverage of the small cell to the macro cell.

### BRIEF DESCRIPTION OF DRAWINGS

To make the technical solutions of the embodiments of the present application clearer, the following briefly describes the accompanying drawings required for describing the embodiments. Evidently, the accompanying drawings in the following description show merely some of the embodiments of the present application, and a person of ordinary skill in the art may obtain other drawings based on these accompanying drawings without creative efforts.
FIG. 1 is a flow chart of a small cell coverage adjusting method according to an embodiment of the present application;
FIG. 2a-FIG.2c are three different architecture diagrams of a macro cell and small cell deployment according to an embodiment of the present application;
FIG. 3 is a flow chart of another small cell coverage adjusting method according to an embodiment of the present application;
FIG. 4 is a flow chart of another small cell coverage adjusting method according to an embodiment of the present application;
FIG. 5 is a flow chart of still another small cell coverage adjusting method according to an embodiment of the present application;
FIG. 6 is a flow chart of a method for reporting high speed downlink packet access schedule timeslot duty cycle information of a small cell according to an embodiment of the present application;
FIG. 7 is a structural diagram of a small cell coverage adjusting device according to an embodiment of the present application;
FIG. 8 is a structural diagram of another small cell coverage adjusting device according to an embodiment of the present application; and
FIG. 9 is a structural diagram of a small cell coverage adjusting system according to an embodiment of the present application.

### DESCRIPTION OF EMBODIMENTS

The following clearly and completely describes the technical solutions in the embodiments of the present application with reference to the accompanying drawings in the embodiments of the present application. Apparently, the described embodiments are merely a part rather than all of the embodiments of the present application. All other embodiments obtained by a person of ordinary skill in the art based on the embodiments of the present application without making creative efforts shall fall within the protection scope of the present application.

Technologies described in this document may be used in various communication systems, for example, current 2G and 3G communication systems and a next-generation communication system, for example, a Global System for Mobile Communications system(GSM, Global System for Mobile Communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless) system, a Frequency Division Multiple Access (FDMA, Frequency Division Multiple Addressing) system, an orthogonal frequency-division multiple access (OFDMA, Orthogonal Frequency-Division Multiple Access) system, a single-carrier FDMA (SC-FDMA) system, a general packet radio service (GPRS, General Packet Radio Service) system, a Long Term Evolution (LTE, Long Term Evolution) system, and other communication systems of this type.

The present document describes various aspects with reference to a user equipment and/or a base station and/or a base station controller.

The user equipment may be a wireless terminal or a wired terminal, where the wireless terminal may refer to a device providing voice and/or data connectivity for a user, a handheld device with a wireless connection function, or other processing devices connected to a wireless modem. The wireless terminal may communicate with one or more core networks through a wireless access network (for example, RAN, Radio Access Network), and the wireless terminal may be a mobile terminal, for example, a mobile phone (also called a "cellular" phone), or a computer with a mobile terminal, for example, a portable, pocket-sized, handheld, computer-build-in, or vehicle-mounted mobile apparatus, which exchanges language and/or data with the wireless access network. For example, it may be a device such as a personal communication service (PCS, Personal Communication Service) phone, a cordless telephone set, a Session Initiation Protocol (SIP) phone, a wireless local loop (WLL, Wireless Local Loop) station, and a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device in communication with a wireless terminal through one or more sectors at an air interface in an access network. The base station may be configured to mutually convert a received air frame and an IP packet and serve as a router between the wireless terminal and a rest portion of the access network, where the rest portion of the access network may include an Internet protocol (IP) network. The base station may further coordinate attribute management of the air interface. For example, the base station may be a base station (BTS, Base Transceiver Station) in the GSM or the CDMA, or may also be a base station (NodeB) in the WCDMA, or may further be an evolutional base station (NodeB, eNB, or e-NodeB, evolutional Node B) in the LTE, which is not limited in the present application.

The base station controller may be a base station controller (BSC, base station controller) in the GSM or CDMA, or may also be a radio network controller (RNC, Radio Network Controller) in the WCDMA, which is not limited in the present application.

In addition, the terms "system" and "network" in this document can always be exchanged for use in this document. The term "and/or" in this document merely describes an association between associated objects, and indicates that three relationships may exist, for example, A and/or B may indicate three situations: only A exists, A and B exist at the same time, and only B exists. In addition, the symbol "/" in this document usually represents that associated objects before and after the symbol are in an "or" relationship.

Embodiments of the present application provide a small cell coverage adjusting method, device, and system, which can dynamically adjust a coverage parameter of a small cell according to a current condition of a macro cell and the small cell, so that the small cell may offload services on the macro cell better, and decrease intra-frequency interference caused by the coverage of the small cell to the macro cell. The embodiments of the present application are described in detail as follows:

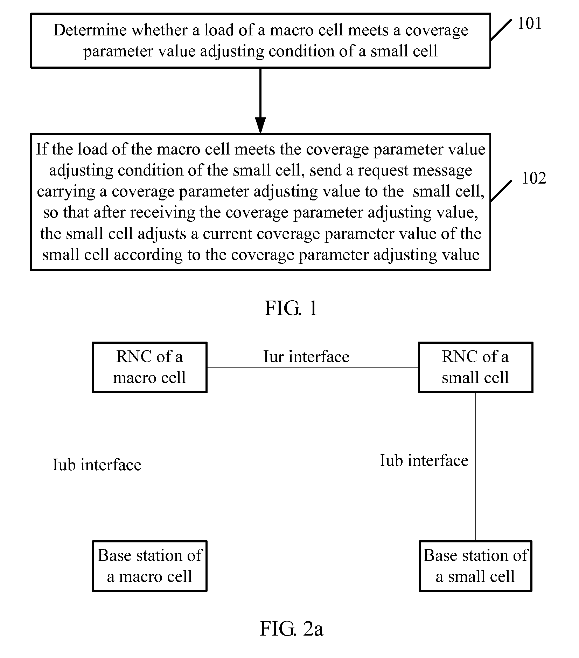

Referring to FIG. 1, FIG. 1 is a flow chart of a small cell coverage adjusting method according to an embodiment of the present application. As shown in FIG. 1, the small cell coverage adjusting method may be as follows:
101: Determine whether a load of a macro cell meets a coverage parameter value adjusting condition of a small cell.

For example, a coverage parameter value of the small cell includes an RE value of the small cell or a pilot power value of the small cell; and in another embodiment of the present application, the coverage parameter value of the small cell may include a pilot power bias value of the small cell, that is, a percentage of the pilot power of the small cell to the total transmit power of the small cell.

102: If the load of the macro cell meets the coverage parameter value adjusting condition of the small cell, send a request message carrying a coverage parameter adjusting value to the small cell, so that after receiving the coverage parameter adjusting value, the small cell adjusts a current coverage parameter value of the small cell according to the coverage parameter adjusting value.

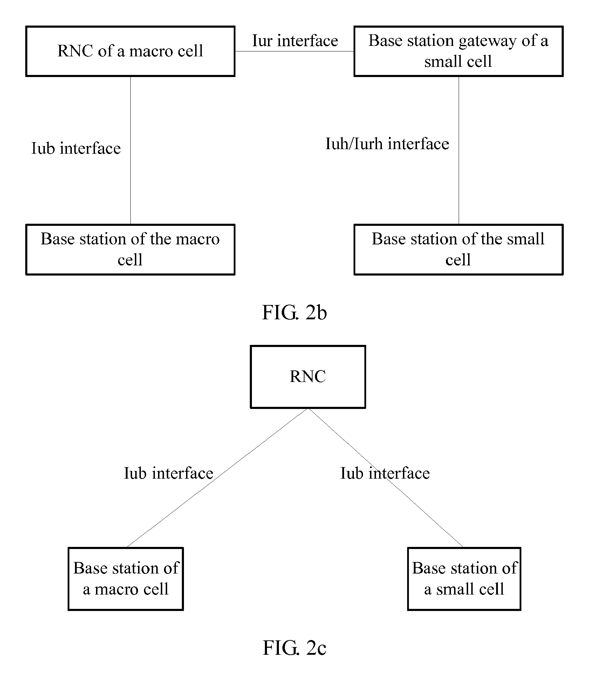

In the embodiment of the present application, as shown in FIG. 2a, a base station of a macro cell may be managed by a radio network controller (Radio Network Controller, RNC) of the macro cell, and a base station of a small cell may be managed by an RNC of the small cell; alternatively, as shown in FIG. 2b, a base station of a small cell may also complete exchanging information with an RNC of a macro cell through a base station gateway of the small cell; alternatively, as shown in FIG. 2c, a base station of a small cell and a base station of a macro cell are managed by the same RNC (that is, an RNC of the base station of the small cell or an RNC of the base station of the macro cell). In particular, when the base station of the small cell completes exchanging information with the RNC of the macro cell through the base station gateway of the small cell, the base station of the small cell may complete RNC functions of the small cell, and at this time, the base station gateway of a small cell provides a convergence function. In practical applications, as shown in FIG. 2a, if the macro cell is managed by the RNC of the macro cell, and the small cell is managed by the RNC of the small cell, the base station of the macro cell may exchange information with the RNC of the macro cell through an Iub interface, the base station of the small cell may also exchange information with the RNC of the small cell through the Iub interface, and an RNC of a macro base station may exchange information with the RNC of the small cell through an Iur interface. As shown in FIG. 2b, if the base station of the macro cell is managed by the RNC of the macro cell, and the base station of the small cell exchanges information through the base station gateway of the small cell, the base station of the macro cell may exchange information with the RNC of the macro cell through the Iub interface, the base station of the small cell may exchange information with the base station gateway of the small cell through an Iuh interface or an Iurh interface, and the RNC of the macro base station may exchange information with the base station gateway of the small cell through the Iur interface.

Therefore, in step 101, whether the load of the macro cell meets the coverage parameter value adjusting condition of the small cell may be determined by the RNC of the macro cell, and in step 102, if the load of the macro cell meets the coverage parameter value adjusting condition of the small cell, the RNC of the macro cell may send the request message carrying the coverage parameter adjusting value to the RNC of the small cell or forwards the request message to the base station of the small cell through the base station gateway of the small cell, so that after determining to accept the coverage parameter adjusting value, the RNC of the small cell or the base station of the small cell adjusts the current coverage parameter value of the small cell according to the coverage parameter adjusting value. For the purpose of convenient description, the embodiments of the present application take the base station of the macro cell being managed by the RNC of the macro cell and the base station of the small cell being managed by the RNC of the small cell as examples to introduce the small cell coverage adjusting method provided in the embodiments of the present application.

As an optional implementation manner, the small cell coverage adjusting method shown in FIG. 1 may be triggered by step 1) and step 2).
1) The macro cell (that is, the RNC of the macro cell) receives a coverage parameters report message from the small cell (that is, the RNC of the small cell), where, the coverage parameters report message at least carries an identifier of the small cell and the current coverage parameter value of the small cell.
   As an optional implementation manner, the coverage parameter report message sent by the small cell (that is, the RNC of the small cell) may be actively sent by the small cell (that is, the RNC of the small cell) to the macro cell (that is, the RNC of the macro cell) when a coverage parameter of the small cell changes.
2) If the current coverage parameter value of the small cell is within an adjustable range, the macro cell (that is, the RNC of the macro cell) selects the small cell as a small cell whose coverage parameter is to be adjusted.

For example, if the current coverage parameter value of the small cell is larger than a maximum threshold, the macro cell (that is, the RNC of the macro cell) does not select the small cell as the small cell whose coverage parameter is to be adjusted; reversely, if the current coverage parameter value of the small cell is smaller than a minimum threshold, the macro cell (that is, the RNC of the macro cell) does not select the small cell as the small cell whose coverage parameter is to be adjusted either. That is to say, when the current coverage parameter value of the small cell is between the maximum threshold and the minimum threshold, the current coverage parameter value of the small cell is thought to be within the adjustable range.

On the basis of step 1) and step 2), in step 102, the sending a request message carrying a coverage parameter adjusting value to the small cell, so that after determining to accept the coverage parameter adjusting value, the small cell adjusts a current coverage parameter value of the small cell according to the coverage parameter adjusting value may be that: The macro cell (that is, the RNC of the macro cell) sends the request message carrying the coverage parameter adjusting value to the small cell whose coverage parameter is to be adjusted, so that after determining to accept the coverage parameter adjusting value, the small cell whose coverage parameter is to be adjusted adjusts, according to the coverage parameter adjusting value, a current coverage parameter value of the small cell whose coverage parameter is to be adjusted.

As an optional implementation manner, in step 1), the coverage parameter report message sent by the small cell (that is, the RNC of the small cell) may further carry location information of the small cell relative to the macro cell, so that the coverage parameter adjusting value carried by the request message sent by the macro cell (that is, the RNC of the macro cell) matches the location information. For example, when the location information is large (that is, a distance between the base station of the small cell and the base station of the macro cell is larger than or equal to a first distance threshold), the coverage parameter adjusting value carried by the request message sent by the macro cell (that is, the RNC of the macro cell) is larger than or equal to a first coverage parameter threshold, thereby effectively extending the coverage of the small cell, so that the small cell may help the macro cell offload services better; or when the location information is small (that is, a distance between the base station of the small cell and the base station of the macro cell is smaller than or equal to a second distance threshold), the coverage parameter adjusting value carried by the request message sent by the macro cell (that is, the RNC of the macro cell) is smaller than or equal to a second coverage parameter threshold, thereby effectively controlling the coverage of the small cell, reducing intra-frequency interference between the small cell and the macro cell; where, the second distance threshold is smaller than the first distance threshold, and the first coverage parameter threshold is larger than the second coverage parameter threshold.

As another optional implementation manner, the small cell coverage adjusting method shown in FIG. 1 may be periodically triggered by the macro cell (that is, the RNC of the macro cell), or when a coverage parameter (that is, load information and so on) of the macro cell changes, be triggered by the small cell (that is, the RNC of the small cell), and in this case, the small cell (that is, the RNC of the small cell) does not need to send the coverage parameters report message.

As an optional implementation manner, in step 101, the determining whether a load of a macro cell meets a coverage parameter value adjusting condition of a small cell may specifically include: determining, by the macro cell (that is, the RNC of the macro cell), whether an uplink load and a downlink load of the macro cell are both lower than respective preset thresholds, and if yes, determining that the load of the macro cell meets the coverage parameter value adjusting condition of the small cell; in this case, the coverage parameter adjusting value carried by the request message in step 102 may be smaller than the current coverage parameter value of the small cell, so that the coverage of the small cell may be reduced when the load of the macro cell is low.

As another optional implementation manner, in step 101, the determining whether a load of a macro cell meets a coverage parameter value adjusting condition of a small cell may specifically include: determining, by the macro cell (that is, the RNC of the macro cell), whether an uplink load or a downlink load of the macro cell is either higher than a respective preset threshold, and if yes, determining that the load of the macro cell meets the coverage parameter value adjusting condition of the small cell; in this case, the coverage parameter adjusting value carried by the request message in step 102 may be larger than the current coverage parameter value of the small cell, so that the coverage of the small cell may be extended when the load of the macro cell is high.

As an optional implementation manner, the small cell coverage adjusting method shown in FIG. 1 may further include following steps: The macro cell (that is, the RNC of the macro cell) receives a response message sent by the small cell, where, the response message carries the adjusted coverage parameter value of the small cell. In particular, when the coverage parameter value of the small cell is an RE value of the small cell, after the small cell completes adjusting the RE value, it needs to send the adjusted RE value of the small cell to the macro cell (that is, the RNC of the macro cell) through a response message, so that the macro cell (that is, the RNC of the macro cell) applies the RE value to the small cell.

In an embodiment, when the coverage parameter value of the small cell is a pilot power value of the small cell, after the small cell completes adjusting the pilot power value, it may not send a coverage control response message to the macro cell (that is, the RNC of the macro cell).

In the small cell coverage adjusting method shown in FIG.1, the coverage parameter of the small cell can be dynamically adjusted according to a current condition of the macro cell and the small cell, so that the small cell can offload services on the macro cell better; and meanwhile, the small cell blindly expanding the coverage is avoided to decrease the intra-frequency interference caused by the coverage of the small cell to the macro cell.

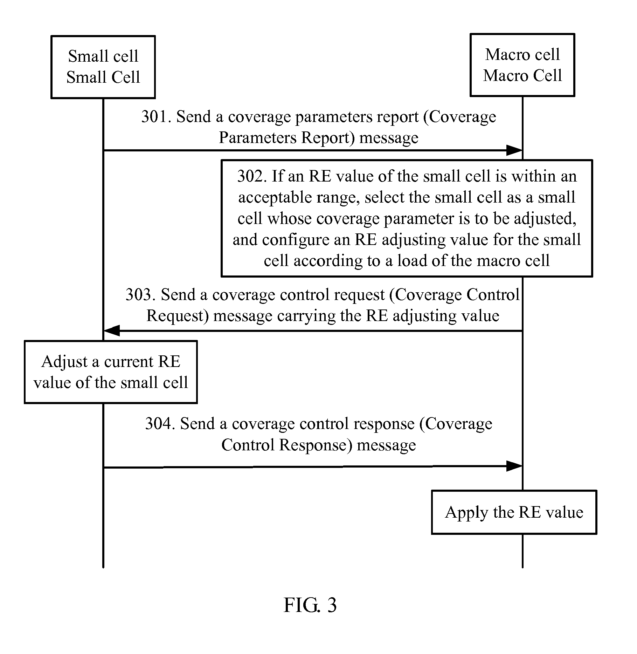

Referring to FIG. 3, FIG. 3 is a flow chart of a small cell coverage adjusting method according to an embodiment of the present application. In FIG. 3, a coverage parameter of a small cell being an RE value of the small cell is taken as an example to introduce the small cell coverage adjusting method provided in the embodiment of the present application. As shown in FIG. 3, the small cell coverage adjusting method may include following steps.

301: A macro cell (that is, an RNC of the macro cell) receives a coverage parameters report (Coverage Parameters Report) message from a small cell (that is, an RNC of the small cell), where, the coverage parameters report (Coverage Parameters Report) message at least carries an identifier of the small cell and a current RE value of the small cell.

As an optional implementation manner, the coverage parameters report (Coverage Parameters Report) message sent by the small cell (that is, the RNC of the small cell) may further carry location information of the small cell relative to the macro cell, the transmit power of the small cell, and so on. In practical applications, the location information of the small cell relative to the macro cell may be divided into three categories: far, middle, and near.

302: If the current RE value of the small cell is within an adjustable range, the macro cell (that is, the RNC of the macro cell) selects the small cell as a small cell whose coverage parameter is to be adjusted; and configures an RE adjusting value to the small cell according to a load of the macro cell.

The small cell configures the RE adjusting value of the micro cell according to the load of the macro cell, where, if the load of the macro cell is low, the macro cell (that is, the RNC of the macro cell) may configure an RE adjusting value that is smaller than the current RE value of the small cell, so as to reduce the coverage of the small cell; or if the load of the macro cell is high, the macro cell (that is, the RNC of the macro cell) may configure an RE adjusting value that is larger than the current RE value of the small cell, so as to extend the coverage of the small cell.

In an embodiment, if an uplink load of the macro cell is lower than a threshold (UL_load_low), and a downlink load of the macro cell is lower than a threshold (DL_load_low), the macro cell (that is, the RNC of the macro cell) may configure an RE adjusting value that is lower than the current RE value of the small cell to the small cell, so as to reduce the coverage of the small cell; meanwhile if an uplink load of the macro cell is higher than a threshold (UL_load_high), or a downlink load of the macro cell is higher than a threshold (DL_load_high), the macro cell (that is, the RNC of the macro cell) may configure an RE adjusting value that is larger than the current RE value of the small cell to the small cell, so as to extend the coverage of the small cell.

In an embodiment, if the coverage parameters report message (Coverage Parameters Report) sent by the small cell (that is, the RNC of the small cell) further carries location information of the small cell relative to the macro cell, the RE adjusting value configured by the macro cell (that is, the RNC of the macro cell) to the small cell may match the location information.

303: The macro cell (that is, the RNC of the macro cell) sends a request message carrying the RE adjusting value, for example, the coverage control request (Coverage Control Request) message to the small cell, so that after determining to accept a coverage parameter adjusting value, the small cell adjusts the current RE value of the small cell according to the RE adjusting value.

In an embodiment, the macro cell (that is, the RNC of the macro cell) may also send one or more RE adjusting values to the small cell through the coverage control request (Coverage Control Request) message for determining, and finally select a proper RE adjusting value. Furthermore, the coverage control request (Coverage Control Request) message may also carry the time of adjusting the RE value, the step length of adjusting the RE), or the like, which is not limited in the embodiment of the present application.

The embodiments of the present application will describe the processes of the small cell determining whether to accept the RE adjusting value in detail with reference to specific embodiments, which will not be described herein.

304: The macro cell (that is, the RNC of the macro cell) receives a response message sent by the small cell, for example, the coverage control response message Coverage Control Response, where, the coverage control response message Coverage Control Response carries the adjusted RE value of the small cell; and the macro cell (that is, the RNC of the macro cell) applies the RE value to the small cell.

In the small cell coverage adjusting method shown in FIG.3, the macro cell (that is, the RNC of the macro cell) can dynamically adjust a coverage parameter of the small cell according to a current condition of the macro cell and the small cell, so that the small cell can offload services on the macro cell better; and meanwhile, the small cell blindly expanding the coverage is avoided to decrease intra-frequency interference caused by the coverage of the small cell to the macro cell.

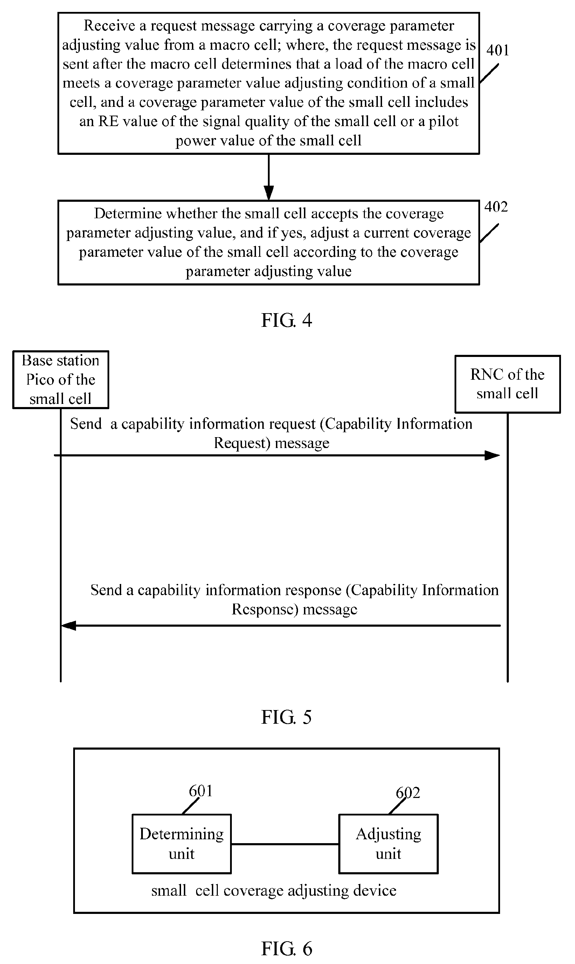

Further referring to FIG. 4, FIG. 4 is a flow chart of a small cell coverage adjusting method according to an embodiment of the present application. As shown in FIG. 4, the small cell coverage adjusting method may include following steps.

401: Receive a request message carrying a coverage parameter adjusting value from a macro cell (that is, an RNC of the macro cell); where, the request message is sent after the macro cell (that is, the RNC of the macro cell) determines that a load of the macro cell meets a coverage parameter value adjusting condition of a small cell, and a coverage parameter value of the small cell includes an RE value of the small cell or a pilot power value or a pilot power bias value of the small cell.

402. Determine whether the small cell accepts the coverage parameter adjusting value, and if yes, adjust a current coverage parameter value of the small cell according to the coverage parameter adjusting value.

In an embodiment, when a base station of the small cell is managed by an RNC of the small cell, the RNC of the small cell may execute step 401 and step 402; when the base station of the small cell exchanges information through a base station gateway of the small cell, the base station gateway of the small cell may execute step 401, and the base station of the small cell executes step 402, which is not limited in the embodiment of the present application.

As an optional implementation manner, before step 401, the small cell coverage adjusting method shown in FIG. 4 may further include following steps:
The RNC or the base station gateway of the small cell sends a coverage parameters report message at least carrying an identifier of the small cell and the current coverage parameter value of the small cell to the macro cell (that is, the RNC of the macro cell), so that when the macro cell (that is, the RNC of the macro cell) determines the current coverage parameter value of the small cell is within an adjustable range, the macro cell selects the small cell as a small cell whose coverage parameter is to be adjusted, and sends the request message carrying the coverage parameter adjusting value. That is to say, in the small cell coverage adjusting method shown in FIG. 4, the RNC or the base station of the small cell may send the coverage parameters report message at least carrying the identifier of the small cell and the current coverage parameter value of the small cell to the macro cell (that is, the RNC of the macro cell), and trigger the macro cell (that is, the RNC of the macro cell) to execute step 101 and step 102.

As an optional implementation manner, the determining whether the small cell accepts the coverage parameter adjusting value in step 402 may be detailed as follows:
If the coverage parameter adjusting value is higher than the current coverage parameter value of the small cell, that is to say, the macro cell (that is, the RNC of the macro cell) hopes to extend the coverage of the small cell, the RNC of the small cell or the base station of the small cell may determine whether capability information of the small cell is smaller than a preset threshold, and if yes, the RNC of the small cell or the base station of the small cell may determine that the small cell accepts the coverage parameter adjusting value; or if no, the RNC of the small cell or the base station of the small cell may determine that the small cell does not accept the coverage parameter adjusting value.

The capability information of the small cell may include the number of accessed users of the small cell, the resource usage of the small cell, and one or more pieces of high speed downlink packet access (High Speed Downlink Packet Access, HSDPA) schedule timeslot duty cycle information. For example, when all above values are smaller than corresponding specific preset thresholds, the RNC of the small cell or the base station of the small cell may determine that the small cell accepts the coverage parameter adjusting value; reversely, when a certain value is larger than a corresponding specific preset threshold, the RNC of the small cell or the base station of the small cell may determine that the small cell does not accept the coverage parameter adjusting value. In this case, the RNC of the small cell or the base station of the small cell may choose to properly reduce a current coverage parameter of the small cell.

As an optional implementation manner, the determining whether the small cell accepts the coverage parameter adjusting value in step 402 may be detailed as follows:
If the coverage parameter adjusting value is lower than the current coverage parameter value of the small cell, that is to say, the macro cell (that is, the RNC of the macro cell) hopes to reduce the coverage of the small cell, the RNC of the small cell or the base station of the small cell may determine that the small cell accepts the coverage parameter adjusting value.

In an embodiment, the RNC or the base station of the small cell may receive request messages carrying the coverage parameter adjusting value from multiple macro cells (including intra-frequency or inter-frequency macro cells), and when the coverage parameter adjusting values sent by the multiple macro cells are all accepted by the small cell, the RNC of the small cell or the base station of the small cell may select an acceptable largest coverage parameter adjusting value according to capability information of the small cell, so as to help the macro cell implement the service offloading better.

In practical applications, when the RNC of the small cell or the base station of the small cell receives request messages carrying the coverage parameter adjusting value from intra-frequency or inter-frequency macro cells, the RNC of the small cell or the base station of the small cell may preferentially meet the requirements of the intra-frequency macro cells.

In particular, when the coverage parameter value of the small cell is a pilot power value or a pilot power bias value of the small cell, by configuring the pilot power value or the bias value of the small cell to zero, the macro cell may implement disabling a function of disabling the small cell, so as to achieve the objectives of energy saving and completely avoiding interference.

In an embodiment, when the capability information of the small cell includes the HSDPA schedule timeslot duty cycle information, and the small cell is managed by the RNC of the small cell, or the small cell and the macro cell are managed by the same RNC, the base station of the small cell may send the HSDPA schedule timeslot duty cycle information of the small cell within a period of statistic time to the RNC of the small cell. As shown in FIG. 5, a base station of the small cell Pico may send a capability information request (Capability Information Request) message to the RNC of the small cell through an Iub interface, where, the capability information request (Capability Information Request) message may carry the HSDPA schedule timeslot duty cycle information of the small cell; and correspondingly, after the RNC of the small cell obtains the HSDPA schedule timeslot duty cycle information of the small cell, the RNC may send a capability information response (Capability Information Response) message to the base station of the small cell Pico.

In an embodiment, when the capability information of the small cell includes the HSDPA schedule timeslot duty cycle information, and the base station of the small cell exchanges information through the base station gateway of the small cell, the base station of the small cell Pico does not need to send the HSDPA schedule timeslot duty cycle information of the small cell to the base station gateway of the small cell, because the base station of the small cell has the capability to automatically get the HSDPA schedule timeslot duty cycle information of the small cell.

As an optional implementation manner, in the small cell coverage adjusting method shown in FIG. 4, after the RNC of the small cell or the base station of the small cell adjusts the current coverage parameter value of the small cell according to the coverage parameter adjusting value, the RNC of the small cell or the base station of the small cell may send a response message to the macro cell (that is, the RNC of the macro cell) through the base station gateway, where, the response message carries the adjusted coverage parameter value of the small cell. In particular, when the coverage parameter value of the small cell is the RE value of the small cell, after the RNC of the small cell or the base station of the small cell completes adjusting the RE value of the small cell and applies the RE value, the RNC of the small cell or the base station of the small cell needs to send the adjusted RE value of the small cell to the macro cell (that is, the RNC of the macro cell) through a response message, so that the macro cell (that is, the RNC of the macro cell) applies the RE value.

In an embodiment, when the coverage parameter value of the small cell is the pilot power value or the pilot power bias value of the small cell, after the RNC of the small cell or the base station of the small cell completes adjusting the pilot power value of the small cell, it may not send a response message to the macro cell (that is, the RNC of the macro cell).

In view of the above, in the small cell coverage adjusting method shown in FIG. 4, a coverage parameter of the small cell can be dynamically adjusted according to a current condition of the macro cell and the small cell, so that the small cell can offload services on the macro cell better; and meanwhile, the small cell blindly expanding the coverage is avoided to decrease intra-frequency interference caused by the coverage of the small cell to the macro cell.

It should be noted that, the macro cell in the above embodiment may also be a small cell, that is, when own capability or a load of a small cell has been changed, the small cell may also initiate coverage coordination processes to a certain macro cell or another small cell, and coordinates its own coverage parameter value or a coverage parameter value of another small cell through a request message.

Referring to FIG. 6, FIG. 6 is a structural diagram of a small cell coverage adjusting device according to an embodiment of the present application. The small cell coverage adjusting device shown in FIG. 6 may serve as an independent device to provide services for a macro cell, may also be an added part of an RNC of a macro cell to provide services for the macro cell, or be an RNC of a macro cell. As shown in FIG. 6, the small cell coverage adjusting device may include a determining unit 601 and an adjusting unit 602.

The determining unit 601 is configured to determine whether a load of a macro cell meets a coverage parameter value adjusting condition of a small cell, where, the coverage parameter value of the small cell includes an RE value of the small cell or a pilot power value of the small cell; and the adjusting unit 602 is configured to: when the load of the macro cell meets the coverage parameter value adjusting condition of the small cell, send a request message carrying a coverage parameter adjusting value to the small cell, so that after receiving the coverage parameter adjusting value, the small cell adjusts a current coverage parameter value of the small cell according to the coverage parameter adjusting value.

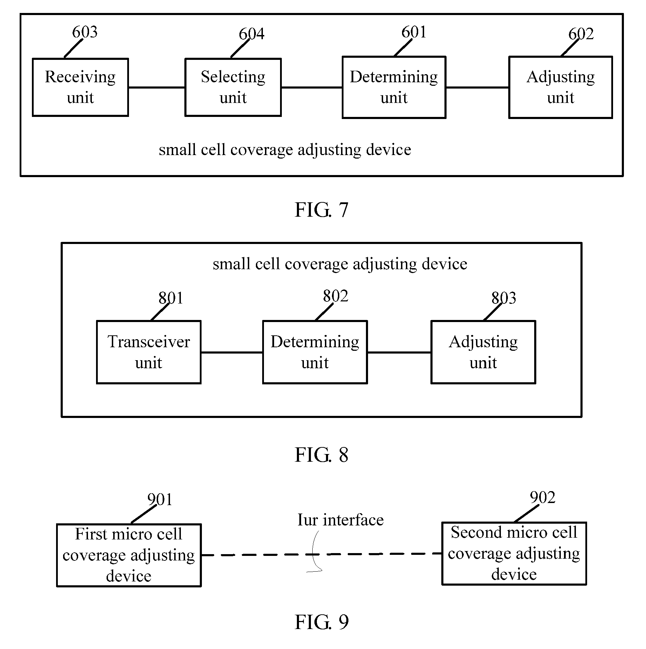

Further referring to FIG. 7, FIG. 7 is another structural diagram of a small cell coverage adjusting device optimized based on the small cell coverage adjusting device shown in FIG. 6 according to an embodiment of the present application. Compared with the small cell coverage adjusting device shown in FIG. 6, the small cell coverage adjusting device shown in FIG. 7 may further include a receiving unit 603 and a selecting unit 604.

The receiving unit 603 is configured to receive a coverage parameters report message sent by the small cell, where, the coverage parameters report message at least carries an identifier of the small cell and the current coverage parameter value of the small cell; and the selecting unit 604 is configured to: when the current coverage parameter value of the small cell carried by the coverage parameters report message is within an adjustable range, select the small cell as a small cell whose coverage parameter is to be adjusted. Correspondingly, the adjusting unit 602 is specifically configured to: when the load of the macro cell meets the coverage parameter value adjusting condition of the small cell, send the request message carrying the coverage parameter adjusting value to the small cell whose coverage parameter is to be adjusted, so that after determining to accept the coverage parameter adjusting value, the small cell whose coverage parameter is to be adjusted adjusts, according to the coverage parameter adjusting value, a current coverage parameter value of the small cell whose coverage parameter is to be adjusted.

As an optional implementation manner, the above coverage parameters report message may further carry location information of the small cell relative to the macro cell, so that the coverage parameter adjusting value carried by a coverage control request message sent by the adjusting unit 602 matches the location information.

As an optional implementation manner, in the small cell coverage adjusting devices shown in FIG. 6 and FIG. 7, the determining unit 601 is specifically configured to determine whether an uplink load and a downlink load of the macro cell are both lower than respective preset thresholds, and if yes, determine that the load of the macro cell meets the coverage parameter value adjusting condition of the small cell; in this case, the coverage parameter adjusting value carried by the coverage control request message is smaller than the current coverage parameter value of the small cell.

As an optional implementation manner, in the small cell coverage adjusting devices shown in FIG. 6 and FIG. 7, the determining unit 601 is specifically configured to determine whether an uplink load or a downlink load of the macro cell is either higher than a respective preset threshold, and if yes, determine that the load of the macro cell meets the coverage parameter value adjusting condition of the small cell; where, the coverage parameter adjusting value carried by the coverage control request message is larger than the current coverage parameter value of the small cell.

As an optional implementation manner, in the small cell coverage adjusting device shown in FIG. 7, the receiving unit 603 is further configured to receive a response message sent by the small cell, where, the response message carries the adjusted coverage parameter value of the small cell.

The small cell coverage adjusting devices shown in FIG. 6 and FIG. 7 can dynamically adjust a coverage parameter of the small cell according to a current condition of the macro cell and the small cell, so that the small cell can offload services on the macro cell better; and meanwhile, the small cell blindly expanding the coverage is avoided, so as to decrease intra-frequency interference caused by the coverage of the small cell to the macro cell.

Referring to FIG. 8, FIG. 8 is a structural diagram of a small cell coverage adjusting device according to an embodiment of the present application. The small cell coverage adjusting device shown in FIG. 8 may serve as an independent device to provide services for a small cell, or may be an added part of an RNC of a small cell or a base station gateway of a small cell to provide services for a macro cell, or may be an RNC of a small cell or a base station gateway of a small cell. As shown in FIG. 8, the small cell coverage adjusting device may include a transceiver unit 801, a determining unit 802, and an adjusting unit 803.

The transceiver unit 801 is configured to receive a request message carrying a coverage parameter adjusting value from a macro cell; where, the request message is sent after the macro cell determines that a load of the macro cell meets a coverage parameter value adjusting condition of a small cell, where the coverage parameter value includes an RE value of the small cell or a pilot power value of the small cell; the determining unit 802 is configured to determine whether the small cell accepts the coverage parameter adjusting value; and the adjusting unit 803 is configured to: when a determining result of determining unit 802 is yes, adjust a current coverage parameter value of the small cell according to the coverage parameter adjusting value.

As an optional implementation manner, in the small cell coverage adjusting device shown in FIG. 8, transceiver unit 801 is further configured to: before receiving the request message carrying the coverage parameter adjusting value from the macro cell, send a coverage parameters report message at least carrying an identifier of the small cell and the current coverage parameter value of the small cell to the macro cell, so that when determining that the current coverage parameter value of the small cell is within an adjustable range, the macro cell selects the small cell as a small cell whose coverage parameter is to be adjusted, and sends the request message carrying the coverage parameter adjusting value.

As an optional implementation manner, in the small cell coverage adjusting device shown in FIG. 8, determining unit 802 is specifically configured to: when the coverage parameter adjusting value is higher than the current coverage parameter value of the small cell, determine whether capability information of the small cell is smaller than a preset threshold, and if yes, determine that the small cell accepts the coverage parameter adjusting value; or if no, determine that the small cell does not accept the coverage parameter adjusting value.

Alternatively, the determining unit 802 is specifically configured to: when the coverage parameter adjusting value is lower than the current coverage parameter value of the small cell, determine that the small cell accepts the coverage parameter adjusting value.

As an optional implementation manner, in the small cell coverage adjusting device shown in FIG. 8, if the capability information of the small cell includes HSDPA schedule timeslot duty cycle information of the small cell, the transceiver unit 701 is further configured to receive a capability information message sent by the small cell, where, the capability information message at least carries the HSDPA schedule timeslot duty cycle information of the small cell.

As an optional implementation manner, in the small cell coverage adjusting device shown in FIG. 8, the transceiver unit 801 is further configured to send a response message to the macro cell, where, the response message carries the adjusted coverage parameter value of the small cell.

As an optional implementation manner, in the small cell coverage adjusting device shown in FIG. 8, when the small cell accepts the coverage parameter adjusting values sent by multiple macro cells, the adjusting unit 803 is specifically configured to select a largest coverage parameter adjusting value from the coverage parameter adjusting values accepted by the small cell, which is sent by the multiple macro cells, according to the capability information of the small cell, and adjust the current coverage parameter value of the small cell according to the largest coverage parameter adjusting value.

The small cell coverage adjusting device shown in FIG. 8 can dynamically adjust a coverage parameter of the small cell according to a current condition of the macro cell and the small cell, so that the small cell can offload services on the macro cell better; and meanwhile, the small cell blindly expanding the coverage is avoided, so as to decrease intra-frequency interference caused by the coverage of the small cell to the macro cell.

Referring to FIG. 9, FIG. 9 is a structural diagram of a small cell coverage adjusting system according to an embodiment of the present application. As shown in FIG. 9, the small cell coverage adjusting system may include a first small cell coverage adjusting device 901 and a second small cell coverage adjusting device 902, where, the first small cell coverage adjusting device 901 and the second small cell coverage adjusting device 902 exchange information through an Iur interface, where, the structure of the first small cell coverage adjusting device 901 is same as the structure of the small cell coverage adjusting device shown in FIG. 6 or FIG. 7, and the structure of the second small cell coverage adjusting device 902 is same as the structure of the small cell coverage adjusting device shown in FIG. 8, which are not repeated in the embodiment of the present application.

The first small cell coverage adjusting device 901 is configured to determine whether a load of a macro cell meets the coverage parameter value adjusting condition of the small cell, where, the coverage parameter value of the small cell includes an RE value of the small cell or a pilot power value of the small cell; and if the load of the macro cell meets the coverage parameter value adjusting condition of the small cell, send a request message carrying a coverage parameter adjusting value to the second small cell coverage adjusting device 902.

The second small cell coverage adjusting device 902 is configured to receive the request message carrying the coverage parameter adjusting value from the first small cell coverage adjusting device 901, and determine whether the small cell accepts the coverage parameter adjusting value, and if yes, adjust a current coverage parameter value of the small cell according to the coverage parameter adjusting value.

In the small cell coverage adjusting system shown in FIG. 9, the first small cell coverage adjusting device 901 may be an RNC of the macro cell or an RNC of the small cell or a base station of the small cell, and the second small cell coverage adjusting device 902 may be the RNC of the small cell or the base station of the small cell.

The small cell coverage adjusting system shown in FIG. 9 can dynamically adjust a coverage parameter of the small cell according to a current condition of the macro cell and the small cell, so that the small cell can offload services on the macro cell better; and meanwhile, the small cell blindly expanding the coverage is avoided to decrease intra-frequency interference caused by the coverage of the small cell to the macro cell.

It can be clearly understood by a person skilled in the art that, for the purpose of convenient and brief description, division of the foregoing function modules is taken as an example for illustration, in actual implementation, the foregoing functions may be implemented by different function modules as required, that is, the inner structure of an apparatus is divided into different function modules to implement all or part of the functions described above. For a detailed working process of the foregoing system, apparatus, and unit, reference may be made to the corresponding process in the method embodiments, and the details will not be described herein again.

In the several embodiments provided in the present application, it should be understood that, the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces; the indirect couplings or communication connections between the apparatuses or units may be implemented in electronic, mechanical, or other forms.

The units described as separate parts may or may not be physically separate, and the components displayed as units may or may not be physical units, which may be located in one position, or may be distributed on a plurality of network units. A part or all of the units may be selected according to an actual need to achieve the objectives of the solutions of the embodiments.

In addition, functional units in the embodiments of the present application may be integrated into one processing unit, or each of the unit may physically exist as separate units, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of steps of the methods described in the embodiments of the present application. The storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing embodiments are merely intended for describing the technical solutions of the present application rather than limiting the present application. Although the present application is described in detail with reference to the foregoing embodiments, a person of ordinary skill in the art should understand that they may still make modifications to the technical solutions described in the embodiments, or make equivalent replacements to some technical features in the technical solutions; however, as long as these modifications or replacement do not make the essence of corresponding technical solutions depart from the spirit and scope of the technical solutions of the embodiments of the present application.

## Claims

1. A small cell coverage adjusting method, comprising:
determining whether a load of a macro cell meets a coverage parameter value adjusting condition of a small cell; and
if the load of the macro cell meets the coverage parameter value adjusting condition, sending a request message carrying a coverage parameter adjusting value to the small cell, so that after receiving the coverage parameter adjusting value, the small cell adjusts a current coverage parameter value of the small cell according to the coverage parameter adjusting value.

2. The method according to claim 1, wherein, the coverage parameter value of the small cell comprises a range extension value of the small cell and/or a pilot power value of the small cell.

3. The method according to claim 1, wherein, before the determining whether a load of a macro cell meets a coverage parameter adjusting condition of a small cell, the method further comprises:
receiving a coverage parameters report message sent by the small cell, wherein the coverage parameters report message at least carries an identifier of the small cell and the current coverage parameter value of the small cell.

4. The method according to claim 3, wherein, before the determining whether a load of a macro cell meets a coverage parameter adjusting condition of a small cell, the method further comprises:
if the current coverage parameter value of the small cell is within an adjustable range, selecting the small cell as a small cell whose coverage parameter is to be adjusted.

5. The method according to claim 4, wherein, the sending a request message carrying a coverage parameter adjusting value to the small cell, so that after receiving the coverage parameter adjusting value, the small cell adjusts a current coverage parameter value of the small cell according to the coverage parameter adjusting value comprises:
sending the request message carrying the coverage parameter adjusting value to the small cell whose coverage parameter is to be adjusted, so that after receiving the coverage parameter adjusting value, the small cell whose coverage parameter is to be adjusted adjusts, according to the coverage parameter adjusting value, a current coverage parameter value of the small cell whose coverage parameter is to be adjusted.

6. The method according to claim 3, wherein, the coverage parameters report message further carries location information of the small cell relative to the macro cell, so that the coverage parameter adjusting value carried by the request message matches the location information.

7. The method according to any one of claims 1 to 6, wherein, the determining whether a load of a macro cell meets a coverage parameter value adjusting condition of a small cell comprises:
determining whether an uplink load and a downlink load of the macro cell are both lower than respective preset thresholds, and if yes, determining that the load of the macro cell meets the coverage parameter value adjusting condition of the small cell; wherein, the coverage parameter adjusting value carried by the request message is smaller than the current coverage parameter value of the small cell.

8. The method according to any one of claims 1 to 6, wherein, the determining whether a load of a macro cell meets a coverage parameter value adjusting condition of a small cell comprises:
determining whether an uplink load or a downlink load of the macro cell is either higher than a respective preset threshold, and if yes, determining that the load of the macro cell meets the coverage parameter value adjusting condition of the small cell; wherein, the coverage parameter adjusting value carried by the request message is larger than the current coverage parameter value of the small cell.

9. The method according to any one of claims 1 to 6, wherein, the method further comprises:
receiving a response message sent by the small cell, wherein the response message carries the adjusted coverage parameter value of the small cell.

10. A small cell coverage adjusting method, comprising:
receiving a request message carrying a coverage parameter adjusting value from a macro cell; and
determining whether a small cell accepts the coverage parameter adjusting value, and if yes, adjusting a current coverage parameter value of the small cell according to the coverage parameter adjusting value.

11. The method according to claim 10, wherein, the request message is sent by the macro cell after the macro cell determines that a load of the macro cell meets a coverage parameter value adjusting condition of the small cell, and the coverage parameter value comprises a range extension value of the small cell and/or a pilot power value of the small cell.

12. The method according to claim 10, wherein, before the receiving a request message carrying a coverage parameter adjusting value from a macro cell, the method further comprises:
sending a coverage parameters report message at least carrying an identifier of the small cell and the current coverage parameter value of the small cell to the macro cell, so that when determining that the current coverage parameter value of the small cell is within an adjustable range, the macro cell selects the small cell as a small cell whose coverage parameter is to be adjusted, and sends the request message carrying the coverage parameter adjusting value.

13. The method according to claim 10, 11, or 12, wherein, the determining whether a small cell accepts the coverage parameter adjusting value comprises:
if the coverage parameter adjusting value is higher than the current coverage parameter value of the small cell, determining whether capability information of the small cell is smaller than a preset threshold, and if yes, determining that the small cell accepts the coverage parameter adjusting value; or if no, determining that the small cell does not accept the coverage parameter adjusting value.

14. The method according to claim 10, 11, or 12, wherein, the determining whether a small cell accepts the coverage parameter adjusting value comprises:
if the coverage parameter adjusting value is lower than the current coverage parameter value of the small cell, determining that the small cell accepts the coverage parameter adjusting value.

15. The method according to claim 13, wherein, if the capability information of the small cell comprises High Speed Downlink Packet Access HSDPA schedule timeslot duty cycle information of the small cell, the method further comprises:
receiving a capability information message sent by a base station of the small cell; wherein, the capability information message at least carries the HSDPA schedule timeslot duty cycle information of the small cell.

16. The method according to claim 10, 11, or 12, wherein, the method further comprises:
sending a response message to the macro cell, wherein the coverage control response message carries the adjusted coverage parameter value of the small cell.

17. The method according to claim 10, 11, or 12, wherein, when the small cell accepts the coverage parameter adjusting values sent by multiple macro cells, the adjusting a current coverage parameter value of the small cell according to the coverage parameter adjusting value comprises:
selecting a largest coverage parameter adjusting value from the coverage parameter adjusting values accepted by the small cell, which is sent by the multiple macro cells, according to the capability information of the small cell, and adjusting the current coverage parameter value of the small cell according to the largest coverage parameter adjusting value.

18. A small cell coverage adjusting device, comprising:
a determining unit, configured to determine whether a load of a macro cell meets a coverage parameter value adjusting condition of a small cell; and
an adjusting unit, configured to: when the load of the macro cell meets the coverage parameter value adjusting condition of the small cell, send a request message carrying a coverage parameter adjusting value to the small cell, so that after receiving the coverage parameter adjusting value, the small cell adjusts a current coverage parameter value of the small cell according to the coverage parameter adjusting value.

19. The device according to claim 18, wherein, the coverage parameter value of the small cell comprises a range extension value of the small cell and/or a pilot power value of the small cell.

20. The device according to claim 18, further comprising:
a receiving unit, configured to receive a coverage parameters report message sent by the small cell, wherein the coverage parameters report message at least carries an identifier of the small cell and the current coverage parameter value of the small cell.

21. The device according to claim 20, further comprising:
a selecting unit, configured to: when the current coverage parameter value of the small cell that is carried by the coverage parameters report message is within an adjustable range, select the small cell as a small cell whose coverage parameter is to be adjusted.

22. The device according to claim 21, wherein,
the adjusting unit is specifically configured to: when the load of the macro cell meets the coverage parameter value adjusting condition of the small cell, send the request message carrying the coverage parameter adjusting value to the small cell whose coverage parameter is to be adjusted, so that after receiving the coverage parameter adjusting value, the small cell whose coverage parameter is to be adjusted adjusts, according to the coverage parameter adjusting value, a current coverage parameter value of the small cell whose coverage parameter is to be adjusted.

23. The device according to claim 20, wherein, the coverage parameters report message further carries location information of the small cell relative to the macro cell, so that the coverage parameter adjusting value carried by the request message matches the location information.

24. The device according to any one of claims 18 to 23, wherein, the determining unit is specifically configured to determine whether an uplink load and a downlink load of the macro cell are both lower than respective preset thresholds, and if yes, determine that the load of the macro cell meets the coverage parameter value adjusting condition of the small cell; wherein, the coverage parameter adjusting value carried by the request message is smaller than the current coverage parameter value of the small cell.

25. The device according to any one of claims 18 to 23, wherein, the determining unit is specifically configured to determine whether an uplink load or a downlink load of the macro cell is either higher than a respective preset threshold, and if yes, determine that the load of the macro cell meets the coverage parameter value adjusting condition of the small cell; wherein, the coverage parameter adjusting value carried by the request message is larger than the current coverage parameter value of the small cell.

26. The device according to any one of claims 20 to 23, wherein, the receiving unit is further configured to receive a response message sent by the small cell, wherein the response message carries the adjusted coverage parameter value of the small cell.

27. A small cell coverage adjusting device, comprising:
a transceiver unit, configured to receive a request message carrying a coverage parameter adjusting value from a macro cell;
a determining unit, configured to determine whether a small cell accepts the coverage parameter adjusting value; and
an adjusting unit, configured to: when a determining result of the determining unit is yes, adjust a current coverage parameter value of the small cell according to the coverage parameter adjusting value.

28. The device according to claim 27, wherein, the request message is sent by the macro cell after the macro cell determines that a load of the macro cell meets a coverage parameter value adjusting condition of the small cell, and the coverage parameter value comprises a range extension value of the small cell and/or a pilot power value of the small cell.

29. The device according to claim 27, wherein, the transceiver unit is further configured to: before receiving the request message carrying the coverage parameter adjusting value from the macro cell, send a coverage parameters report message at least carrying an identifier of the small cell and the current coverage parameter value of the small cell to the macro cell, so that when determining that the current coverage parameter value of the small cell is within an adjustable range, the macro cell selects the small cell as a small cell whose coverage parameter is to be adjusted, and sends the request message carrying the coverage parameter adjusting value.

30. The device according to claim 27, 28, or 29, wherein,
the determining unit is specifically configured to: when the coverage parameter adjusting value is higher than the current coverage parameter value of the small cell, determine whether capability information of the small cell is smaller than a preset threshold, and if yes, determine that the small cell accepts the coverage parameter adjusting value; or if no, determine that the small cell does not accept the coverage parameter adjusting value.

31. The device according to claim 27, 28, or 29, wherein,
the determining unit is specifically configured to: when the coverage parameter adjusting value is lower than the current coverage parameter value of the small cell, determine that the small cell accepts the coverage parameter adjusting value.

32. The device according to claim 30, wherein, if the capability information of the small cell comprises High Speed Downlink Packet Access HSDPA schedule timeslot duty cycle information of the small cell, the transceiver unit is further configured to receive a capability information message sent by a base station of the small cell, wherein, the capability information message at least carries the HSDPA schedule timeslot duty cycle information of the small cell.

33. The device according to claim 27, 28, or 29, wherein,
the transceiver unit is further configured to send a response message to the macro cell, wherein the response message carries the adjusted coverage parameter value of the small cell.

34. The device according to claim 27, 28, or 29, wherein, when the small cell accepts the coverage parameter adjusting values sent by multiple macro cells, the adjusting unit is specifically configured to select a largest coverage parameter adjusting value from the coverage parameter adjusting values accepted by the small cell, which is sent by the multiple macro cells, according to the capability information of the small cell, and adjust the current coverage parameter value of the small cell according to the largest coverage parameter adjusting value.

35. A small cell coverage adjusting system, comprising a first small cell coverage adjusting device and a second small cell coverage adjusting device, wherein;
the first small cell coverage adjusting device is configured to determine whether a load of a macro cell meets a coverage parameter value adjusting condition of a small cell, and if the load of the macro cell meets the coverage parameter value adjusting condition, send a request message carrying a coverage parameter adjusting value to the second small cell coverage adjusting device; and
the second small cell coverage adjusting device is configured to receive the request message carrying the coverage parameter adjusting value from the first small cell coverage adjusting device, and determine whether the small cell accepts the coverage parameter adjusting value, and if yes, adjust a current coverage parameter value of the small cell according to the coverage parameter adjusting value.

36. The system according to claim 35, wherein, the coverage parameter value of the small cell comprises a range extension value of the small cell and/or a pilot power value of the small cell.

37. The system according to claim 35 or 36, wherein, the first small cell coverage adjusting device is a radio network controller of the macro cell, and the second small cell coverage adjusting device is a radio network controller of the small cell or a base station of the small cell.
